(19) Europäisches Patentamt
European Patent Office
Office européen des brevets

(11) EP 4 188 691 B1

(12) **EUROPÄISCHE PATENTSCHRIFT**

(45) Veröffentlichungstag und Bekanntmachung des Hinweises auf die Patenterteilung:
**24.07.2024 Patentblatt 2024/30**

(21) Anmeldenummer: **22726625.1**

(22) Anmeldetag: **29.04.2022**

(51) Internationale Patentklassifikation (IPC):
***B32B 1/08*** *(2006.01)* ***B32B 3/26*** *(2006.01)*
***B32B 3/30*** *(2006.01)* ***B32B 7/12*** *(2006.01)*
***B32B 15/08*** *(2006.01)* ***B32B 15/085*** *(2006.01)*
***B32B 15/18*** *(2006.01)* ***B32B 27/08*** *(2006.01)*
***B32B 27/32*** *(2006.01)* ***F16C 33/00*** *(2006.01)*

(52) Gemeinsame Patentklassifikation (CPC):
**B32B 1/08; B32B 3/263; B32B 3/30; B32B 7/12; B32B 15/08; B32B 15/085; B32B 15/18; B32B 27/08; B32B 27/322; F16C 33/201; F16C 33/206; F16C 33/208;** B32B 2250/03; B32B 2307/30; B32B 2307/538; (Forts.)

(86) Internationale Anmeldenummer:
**PCT/EP2022/061440**

(87) Internationale Veröffentlichungsnummer:
**WO 2022/248155 (01.12.2022 Gazette 2022/48)**

(54) **GLEITLAGERVERBUNDWERKSTOFF**
SLIDE BEARING COMPOSITE MATERIAL
MATÉRIAU COMPOSITE POUR PALIER LISSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.05.2021 DE 102021113759**

(43) Veröffentlichungstag der Anmeldung:
**07.06.2023 Patentblatt 2023/23**

(73) Patentinhaber: **KS Gleitlager GmbH**
**68789 St. Leon-Rot (DE)**

(72) Erfinder:
- **BICKLE, Rüdiger**
**68799 Reilingen (DE)**
- **REINICKE, Rolf**
**76669 Bad Schönborn (DE)**
- **KÜNTZLER, Boris**
**76872 Steinweiler (DE)**

(74) Vertreter: **DREISS Patentanwälte PartG mbB**
**Friedrichstraße 6**
**70174 Stuttgart (DE)**

(56) Entgegenhaltungen:
**EP-B1- 2 702 285 US-A1- 2014 010 484**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
B32B 2307/732; B32B 2597/00; F16C 2208/22;
F16C 2208/30; F16C 2240/54

## Beschreibung

Die Erfindung betrifft einen Gleitlagerverbundwerkstoff mit einer metallischen Stützschicht aus einem Stützschichtmaterial, insbesondere aus Stahl, mit einer auf die Stützschicht aufgebrachten Haftvermittlungsschicht aus einem Haftvermittlungsmaterial auf Basis eines ersten thermoplastischen Fluorpolymermaterials und mit einer auf die Haftvermittlungsschicht aufgebrachten Gleitschicht aus einem Gleitschichtmaterial auf Basis eines zweiten thermoplastischen Fluorpolymermaterials.

Auf dem Gebiet der Gleitlagerverbundwerkstoffe besteht seit langer Zeit das bislang nicht auf zufriedenstellende Weise gelöste Problem, dass Fluorpolymere, die sich für die Ausbildung von Gleitschichten eignen, aus just diesem Grund ein Anhaftungsproblem zu Träger- oder Stützsubstraten oder -schichten haben. Bei demjenigen Fluorpolymer, bei dem es sich hinsichtlich des Reibwerts um den besten Gleitwerkstoff aller Zeiten handelt, nämlich PTFE, ist dieses Problem naturgemäß am größten. Es tritt aber auch bei anderen Fluorpolymeren auf.

Zur Lösung dieses Problems wurde schon vor Jahrzehnten vorgeschlagen, die betreffende metallische Stützschicht aufzurauen oder vorzugsweise nasschemisch zu behandeln, insbesondere unter Verwendung von umweltschädlichem Chrom VI. Auf diese Weise wurde eine Modifizierung der metallischen Oberfläche des Stützschichtmaterials erreicht, wodurch auf chemische Weise bessere Haftungskräfte zu einem aufgebrachten Fluorpolymermaterial erreicht werden konnten. In diese Richtung wurde eine große Anzahl von Vorschlägen unterbreitet. Hierbei wurden letzten Endes haftvermittelnde Beschichtungen oder chemische Gruppen bei der metallischen Oberfläche der Stützschicht gebildet.

Daneben war seit ebenfalls wenigstens 20 Jahren mit einer Vielzahl von Patentpublikationen, insbesondere US 6,726,994 B1, der Vorschlag unterbreitet worden, das thermoplastische Fluorpolymermaterial zu funktionalisieren, d.h. mit polaren funktionellen Gruppen zu versehen, die eine gute Haftung zu metallischen Oberflächen ausbilden können. Bei diesen funktionellen Gruppen handelt es sich insbesondere um Hydroxylgruppen, Carboxylgruppen, Carboxylatgruppen, Sulfonsäuregruppen. EP 2 139 675 A1 schlägt vor, dass die Haftvermittlungsschicht wenigstens ein funktionalisiertes thermoplastisches Fluorpolymer mit funktionellen Gruppen der Formel

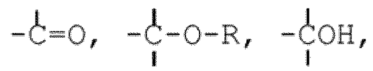

-COOH und/oder -COOR enthält, wobei R zyklische oder lineare organische Reste mit 1 bis 20 Kohlenstoffatomen beschreibt. Gemäß der Lehre dieser letztgenannten Druckschrift könne dann auf eine umweltbedenkliche nasschemische Vorbehandlung der Oberfläche des metallischen Stützschichtmaterials der Stützschicht verzichtet werden und dennoch eine exzellente Haftung der Gleitschicht auf der Stützschicht unter Vermittlung dieser Haftvermittlungsschicht gewährleistet werden. Ökologisch bedenkliche und entsorgungsintensive nasschemische Vorbehandlungsverfahren, insbesondere das sogenannte Chromatieren, könnten so entfallen. Auch physikalische Verfahren zur Oberflächenvorbehandlung (z. B. eine Plasmavorbehandlung durch Coronaentladung), wie sie beispielsweise in der EP 0 848 031 B1, in der ebenfalls bereits ein funktionalisiertes thermoplastisches Fluorpolymer als Bestandteil eines Laminats beschrieben ist, erwähnt werden, seien nicht mehr erforderlich. Als Material der Gleitschicht werden in EP 2 139 675 B1 PTFE, PA, PEEK oder ein Gemisch daraus erwähnt.

US 5,573,846 beschreibt einen Gleitlagerverbundwerkstoff der eingangs genannten Art. Das erste Fluorpolymer ist von modifiziertem PTFE (Copolymer von Perfluoralkyl Vinyl Ether und Tetrafluorethylen) oder aus ETFE oder aus PFA gebildet. Es kann unmittelbar auf eine glatte oder aufgeraute Oberfläche einer metallischen Stützschicht aufgebracht werden. Das Aufrauen der Stützschicht soll die Anbindung des Fluorpolymers an die Stützschicht verbessern. In den Ausführungsbeispielen ist lediglich Aufrauen mittels umweltschädlichen Ätzens genannt.

EP 2 702 285 B1 betrifft ebenfalls einen Gleitlagerverbundwerkstoff der eingangs genannten Art und lehrt, zur Bildung der Haftvermittlungsschicht als Fluorpolymer FEP (Tetrafluorethylen-Hexafluorpropylen) und PFA zu verwenden. Es wird nach einer Ausführungsform ausdrücklich als vorteilhaft bezeichnet und auch beansprucht, dass es sich bei dem PFA um ein funktionalisiertes PFA Polymer mit funktionellen Gruppen handelt. Als Rauigkeit der Oberfläche der Stützschicht, und zwar definiert als $R_{max}$, ist 0,01 μm bis 400 um, insbesondere 0,1 μm bis 400 μm, insbesondere 0,5 μm bis 100 μm, insbesondere 1 μm bis 50 μm genannt. Zur Erzielung der Rauigkeit ist beispielhaft Bürsten, Sandstrahlen oder Prägen genannt. Des Weiteren ist ausgeführt, dass unabhängig von der Oberflächenrauigkeit die Oberfläche auch durch Aufbringen einer Plattierung, wie einer elektrolytisch aufgebrachten Zink-Plattierung modifiziert werden kann. Hierbei handelt es sich aber um ein umweltschädliches nasschemisches Verfahren.

US 2014/0010484 A1 betrifft ebenfalls einen Gleitlagerverbundwerkstoff der eingangs genannten Art und lehrt, zwischen einem ersten Fluorpolymer und der Stützschicht eine Grundierungsschicht auf Basis von Silanol zur Verbesserung der Haftung zwischen der Stützschicht und dem Fluorpolymer aufzubringen. Dieser weitere Schritt ist jedenfalls als aufwändig anzusehen und impliziert die Verwendung eines wässrigen Lösungsmittels, welches wiederum verdampft werden muss. Als Fluorpolymere zur Bildung der Haftvermittlungsschicht sind PFA, MFA, ETFE, FEP allein oder in

Kombinationen und insbesondere in sogenannter modifizierter Form genannt sowie weitere Polymere wie PI, PAI, PPS, $PPSO_2$, LCP, PEEK, ETFE, modifiziertes PTFE. Es ist auch eine Schmelzflussrate der verwandten Polymere genannt von 1 - 100 g/10min, insbesondere 2 - 50 g/10min, insbesondere 3 - 25 g/10min genannt, die bei dem Schmelzpunkt des jeweiligen Materials zu bestimmen sei. Hinsichtlich der Oberflächenrauigkeit finden sich dieselben Hinweise wie in der vorausgehend genannten Druckschrift EP 2 702 285 B1; die Zahlenwerte sind aber als Ra angegeben. Insbesondere ist genannt Ra von 0,01 um bis 400 μm, insbesondere 0,1 μm bis 400 μm, insbesondere 0,5 μm bis 100 μm, insbesondere 1 μm bis 50 μm.

Hier in Rede stehende thermoplastische Fluorpolymere sind am Markt mit verschiedenem Molekulargewicht und stark variierender Schmelzflussrate erhältlich. So bietet Fa.Chemours beispielsweise ein ETFE unter der Bezeichnung Tefzel ETFE HT-2188 mit Schmelzflussrate 15 g/10min und ein ETFE unter der Bezeichnung Tefzel ETFE HT-750 mit Schmelzflussrate 7 g/10min an, jeweils nach ASTM D3159.

Der vorliegenden Erfindung liegt die Aufgabe zugrunde, die Anbindung einer Gleitschicht an eine Stützschicht auf prozesstechnisch noch zufriedenstellendere und insbesondere wirtschaftlichere Weise zu realisieren, wobei ein Gleitlagerverbundwerkstoff geschaffen werden soll, dessen Schichtenverbund den im typischen Betrieb eines hier in Rede stehenden Gleitlagers auftretenden Anforderungen sicher standzuhalten vermag.

Diese Aufgabe wird erfindungsgemäß gelöst durch einen Gleitlagerverbundwerkstoff mit den Merkmalen des Anspruchs 1.

Es wird also an der Verwendung einer Haftvermittlungsschicht aus einem Haftvermittlungsmaterial auf Basis eines ersten thermoplastischen Fluorpolymermaterials festgehalten, die per se eine gute Anbindung an die darauf aufgebrachte Gleitschicht auf Basis eines zweiten thermoplastischen Fluorpolymermaterials aufweist. Es wird nun aber vorgeschlagen, dass das erste thermoplastische Fluorpolymermaterial nicht funktionalisiert ist, d.h. keine ausgehend von einem Basispolymer oder ausgehend von Basismonomeren in einem zusätzlichen Schritt unter Verwendung eines funktionelle Gruppen aufweisenden Modifizierungsagens angefügte haftungsvermittelnde funktionelle Gruppen der eingangs genannten Art aufweist, wie insbesondere OH, COOH. Dies gilt auch für etwaige weitere dem Haftvermittlungsmaterial zugesetzte Polymermaterialien.

Ferner wird vorgeschlagen, dass das die Haftvermittlungsschicht bildende Haftvermittlungsmaterial eine Schmelzflussrate von 15 g/10min - 30 g/10min, insbesondere von wenigstens 20 g/10min, aufweist. Hierdurch wird die Anhaftung der Haftvermittlungsschicht auf der Stützschicht positiv beeinflusst, was an späterer Stelle erläutert werden wird. Diese Schmelzflussrate des Haftvermittlungsmaterials wird bestimmt nach ASTM D3159-04 und der darin genannten D 1238 "Test Method for Melt Flow Rates of Thermoplastics by Extrusion Plastometer", und zwar bei einer Temperatur von 297°C und einer Drucklast von 5 kg auf den Stempel des in der Norm beschriebenen Extrusionsplastometers. Es wird die in der Norm genannte Standard-Form verwendet mit einem Innendurchmesser der Düsen- oder Durchtrittsöffnung von 2,095 mm und einem Durchmesser des Stempelfußes von 9,474 mm, der in einem hierzu komplementären Zylinderraum verschieblich geführt ist.

Ferner wird erfindungsgemäß vorgeschlagen, dass die Stützschicht eine durch mechanisches Aufrauen erzielte Oberflächenrauheit ihres Stützschichtmaterials mit einem Mittenrauwert Ra von 1,0 μm bis 3,0 μm und mit einer gemittelten Rautiefe Rz von 6,3 um bis 25,0 um aufweist. Die beanspruchte Oberflächenrauheit soll demnach erfindungsgemäß lediglich durch mechanisches Aufrauen hergestellt sein, ohne dass zusätzliche insbesondere nasschemische Beschichtungs- oder Behandlungsvorgänge bei dem Stützschichtmaterial zusätzlich vorgenommen werden. Es wurde nämlich in überraschender Weise festgestellt, dass die Anbindung eines thermoplastischen Fluorpolymermaterials ohne funktionelle Gruppen auf einer in der beanspruchten Weise ausgebildeten Oberfläche des metallischen Stützschichtmaterials der Stützschicht zu einer für die hier in Rede stehenden Anwendungen ausreichenden Haftung führt. In dem beanspruchten Parameterbereich des Mittenrauwerts Ra und der gemittelten Rautiefe Rz ist die Anhaftung des nicht funktionalisierten Fluorpolymers sogar ungefähr gleich gut bzw. gleich stark, wie dies bei Verwendung von funktionalisierten Fluorpolymeren erreicht werden kann, wenn ein Haftvermittlungsmaterial einer beanspruchten Schmelzflussrate verwendet wird. Außerhalb dieses Parameterbereichs, also einenends zu geringerer Oberflächenrauheit hin und anderenends zu einer noch raueren Ausbildung der Stützschichtoberfläche hin, fällt die Anhaftung zu beiden Seiten stark ab, was bei der Verwendung von funktionalisierten Polymeren jedoch nicht im selben Maß festgestellt wird.

Der erwähnte Mittenrauwert Ra gibt den mittleren Abstand eines Meßpunktes auf der zu untersuchenden Oberfläche zu einer Mittellinie der Oberflächentopographie an. Die Mittellinie schneidet entlang einer Messstrecke das tatsächliche Profil der Oberflächentopographie so, dass die Summe der Profilabweichungen auf die Länge der Messstrecke verteilt wird, d.h. die Profilabweichungen oberhalb und unterhalb der Mittellinie sich zu null addieren. Der Mittenrauwert Ra entspricht nun dem arithmetischen Mittel der betragsmäßigen Profilabweichungen von der Mittellinie entlang der Messstrecke. Er berechnet sich wie folgt:

$$R_a = \frac{1}{l_m} \int_0^{l_m} |y|\, dx$$

Dabei ist y(x) die Profilabweichung von der vorstehend erläuterten Mittellinie, und zwar nach oben wie auch nach unten. Zur weiteren Erläuterung ist als Figur 2 ein Oberflächenprofil oder Rauheitsprofil y(x) entlang einer Messstrecke in x-Richtung der Länge $l_m$ dargestellt.

In der Figur 2 ist zudem der Mittelwert der quadratischen Abweichungen von der Mittellinie Rq eingezeichnet, der wie folgt definiert ist

$$R_q = \sqrt{\frac{1}{l_m} \int_0^{l_m} y^2 \, dx}$$

Die erwähnte gemittelte Rautiefe Rz (bis DIN EN ISO 4287:1984) wird folgendermaßen ermittelt: eine definierte Messstrecke auf der Oberfläche des Werkstücks, also der aufgerauten Stützschicht, wird in fünf gleich lange einzelne Messstrecken unterteilt. Die Auswertung erfolgt nur über diese fünf Messstrecken, auch wenn zweckmäßigerweise davor und dahinter eine Anlauf- oder Auslaufmessstrecke vorgesehen sein kann. Zur weiteren Verdeutlichung wird auf die Darstellung der Figur 3 hingewiesen. Dort sind fünf Einzelmessstrecken der jeweiligen Länge le entlang der Messstrecke lm zusammen mit dem schon in Figur 2 dargestellten Oberflächenprofil oder Rauheitsprofil abgebildet. Von jeder dieser Einzelmessstrecken le des Profils wird die Differenz aus einem maximalen und minimalen Wert der Profilhöhe als Einzelrautiefe (Rz1, Rz2, Rz3, Rz4 und Rz5) ermittelt. Aus den somit erhaltenen fünf Einzelrautiefen wird der arithmetische Mittelwert gebildet und als gemittelte Rautiefe Rz bezeichnet. Es gilt also

$$R_z = \frac{1}{5} (R_{z1} + R_{z2} + R_{z3} + R_{z4} + R_{z5})$$

Die Bestimmung von Rz erfolgt vorliegend vorzugsweise über fünf Einzelmessstrecken lm einer jeweiligen Länge von 2,5 mm. Die Gesamtmessstrecke aus fünf Einzelmeßstrecken hat demzufolge eine Länge von 12,5 mm.

Das mechanische Aufrauen des Stützschichtmaterials an der Oberfläche der Stützschicht erfolgt vorzugsweise über ein Bandschleifverfahren. Wenn hierfür ein endlos umlaufendes Schleifband verwendet wird, so wird die Schleifrichtung vorzugsweise parallel bzw. fluchtend mit einer Längsrichtung der vorzugsweise bandförmigen Stützschicht gewählt. In diesem Fall wird die Rauheit durch Verwendung eines Lasertasters ermittelt, dessen Abtastrichtung quer zur Schleifrichtung bewegt wird. Sofern das mechanische Aufrauen nicht entlang einer Vorzugsrichtung erfolgt, ist die Abtastrichtung des Messtasters zur Erfassung des Oberflächenprofils also zur Ermittlung des Profilverlaufs entlang der Messstrecke nicht in dieser Weise vorgegeben. Es ist indessen bevorzugt, dass das mechanische Aufrauen durch Schleifen entlang einer linearen Richtung erfolgt, so dass solchenfalls die Abtastrichtung des Messtasters orthogonal zu der linearen Schleifrichtung erfolgt.

Die Bestimmung der vorerwähnten Rauheitskenngrößen Ra, Rz kann insbesondere entsprechend der historischen DIN Norm DIN 4768 und/oder entsprechend DIN EN ISO 4287:1984 und/oder entsprechend dem neuen Normenentwurf DIN EN ISO 21920-1,2,3 erfolgen, die alle die Rauheitskenngrößen Ra, Rz in gleichwertiger Weise definieren.

Mit der vorliegenden Erfindung wurde erkannt, dass bei einer Ausbildung der Oberfläche des metallischen Stützschichtmaterials der Stützschicht im beanspruchten Rauigkeitsbereich, und zwar lediglich durch mechanisches Aufrauen, also ohne eine weitergehende Aktivierung der Oberfläche und ohne Abscheidung von haftvermittelnden Gruppen im Wege einer nasschemischen Vorbehandlung, auch zu nicht funktionalisierten thermoplastischen Fluorpolymeren, die unmittelbar auf die aufgeraute Oberfläche aufgebracht werden, eine gute Anhaftung und somit die Bildung eines Schichtverbundwerkstoffs erreicht werden kann, der sich für die Verwendung des Verbundwerkstoffs als Gleitlagerverbundwerkstoff zur Herstellung von Gleitlagern eignet. Daher wird auch unabhängig von der eingangs genannten Schmelzflussrate des die Haftvermittlungsschicht bildenden Haftvermittlungsmaterials als selbstständig erfindungsbegründend ein Gleitlagerverbundwerkstoff angesehen mit einer metallischen Stützschicht aus einem Stützschichtmaterial, insbesondere aus Stahl, mit einer auf die Stützschicht aufgebrachten Haftvermittlungsschicht aus einem Haftvermittlungsmaterial auf Basis eines ersten thermoplastischen Fluorpolymermaterials und mit einer auf die Haftvermittlungsschicht aufgebrachten Gleitschicht aus einem Gleitschichtmaterial auf Basis eines zweiten thermoplastischen Fluorpolymermaterials, wobei das erste thermoplastischen Fluorpolymermaterial nicht funktionalisiert ist und wobei die Stützschicht eine durch mechanisches Aufrauen erzielte Oberflächenrauheit ihres Stützschichtmaterials mit einem Mittenrauwert Ra von 1,0 um bis 3,0 um und mit einer gemittelten Rautiefe Rz von 6,3 μm bis 25,0 um aufweist. Weitere bevorzugte Merkmale ergeben sich aus den beigefügten abhängigen Patentansprüchen.

Es wurde aber im Zuge weiterer Entwicklungstätigkeit im Hinblick auf die Anhaftung der Haftvermittlungsschicht auf der Stützschicht ein weiterer Zusammenhang zwischen der Rauigkeit der Oberfläche des metallischen Stützschichtmaterials und der Schmelzflussrate, also der Fließfähigkeit des die Haftvermittlungsschicht bildenden Haftvermittlungsmaterials beim Aufbringen auf die Stützschicht erkannt: mit zunehmender Rauigkeit, insbesondere mit zunehmender gemittelter Rautiefe Rz, wird es schwieriger, das Haftvermittlungsmaterial zur Ausbildung einer innigen Verbindung in die Täler der Oberfläche des Stützschichtmaterials einzubringen, sofern das Material bei der Applikation nicht hinreichend fließfähig, also zu zäh oder viskos ist. Andererseits würde ein sehr fließfähiges Haftvermittlungsmaterial hervorstehende Spitzen der Oberfläche der Stützschicht freigegeben und möglicherweise einen direkten Kontakt dieser Spitzen des metallischen Stützschichtmaterials zu dem Gleitschichtmaterial zulassen, was wiederum einer guten Anhaftung zuwiderlaufen würde. Daher sollte das Haftvermittlungsmaterial auch nicht zu fließfähig sein. Bei einer andererseits eher glatten Oberfläche der Stützschicht, also bei geringem Mittenrauwert Ra und geringer gemittelter Rautiefe Rz ist naturgemäß die kontaktvermittelnde Oberfläche geringer als bei rauen Oberflächen (Gebirge haben eine größere Oberfläche als Ebenen), so dass dafür Sorge getragen werden sollte, dass diese eher geringe kontaktvermittelnde Oberfläche auch möglichst weitestgehend vollständig durch Haftvermittlungsmaterial benetzt ist, was wiederum eine eher höhere Schmelzflussrate und damit Fließfähigkeit des Haftvermittlungsmaterials verlangt. Der beanspruchte Parameterbereich der Schmelzflussrate von 15,0 - 30,0 g/10min und insbesondere von wenigstens 20,0 g/10min wird der hier beanspruchten Oberflächenrauheit gerecht und führt zusammen mit dieser zu einem guten Schichtenverbund für die hier intendierten Zwecke.

Somit kann auf aufwändige Vorbehandlungsmaßnahmen, insbesondere auf umweltschädliche nasschemische Vorbehandlungen der Stützschicht, verzichtet werden, ohne dass ein funktionalisiertes Fluorpolymer als Haftvermittlungsmaterial zu einer Gleitschicht auf Basis eines weiteren thermoplastischen Fluorpolymermaterials verwendet werden muss.

Es erweist sich insbesondere als vorteilhaft, wenn die Stützschicht eine durch mechanisches Aufrauen erzielte Oberflächenrauheit ihres Stützschichtmaterials mit einem Mittenrauwert Ra von wenigstens 1,1 um, insbesondere von wenigstens 1,2 µm, insbesondere von wenigstens 1,3 µm und/oder von höchstens 2,8 um, insbesondere von höchstens 2,6 µm, insbesondere von höchstens 2,4 µm, insbesondere von höchstens 2,2 µm, insbesondere von höchstens 2,0 µm aufweist.

Des Weiteren erweist es sich als vorteilhaft, wenn die Stützschicht eine durch mechanisches Aufrauen erzielte Oberflächenrauheit ihres Stützschichtmaterials mit einer gemittelten Rautiefe Rz von wenigstens 8,0 µm, insbesondere von wenigstens 9,0 µm, insbesondere von wenigstens 10,0 µm, und/oder von höchstens 23,0 µm, insbesondere von höchstens 21,0 µm, insbesondere von höchstens 19 µm, insbesondere von höchstens 18,0 µm aufweist.

Als weiter vorteilhaft erweist es sich, wenn das erste thermoplastische Fluorpolymermaterial einen Schmelzpunkt zwischen 220°C und 260°C aufweist.

Vorzugsweise ist das erste thermoplastische Fluorpolymermaterial auf Basis von ETFE gebildet. Dies bedeutet jedoch nicht zwingend, dass das erste thermoplastische Fluorpolymermaterial zu 100% aus ETFE bestehen muss. Ein Fluorpolymermaterial auf Basis von ETFE liegt auch dann vor, wenn neben ETFE bis höchstens 15 Vol.-%, insbesondere bis höchstens 10 Vol.-%, insbesondere bis höchstens 5 Vol.-% und weiter vorzugsweise bis lediglich höchstens 2 Vol.-% andere Polymere, insbesondere Fluorpolymere, zugesetzt sind, die dann aber ebenfalls nicht funktionalisiert sind.

Wie bereits erwähnt, erweist es sich als vorteilhaft, wenn das zweite thermoplastische Fluorpolymermaterial auf Basis von PTFE gebildet ist.

Herstellungstechnisch wird vorgeschlagen, dass die Haftvermittlungsschicht von einer auf die Stützschicht aufgebrachten ersten Folienschicht gebildet ist. D.h., es wird eine zuvor hergestellte Folie aus dem Haftvermittlungsmaterial auf Basis des ersten thermoplastischen Fluorpolymermaterials hergestellt und als Haftvermittlungsschicht auf die Stützschicht aufgebracht. Sie wird dann durch Anwendung von Druck und Wärme mit dem metallischen Stützschichtmaterial der Stützschicht verbunden. Die Dicke der ersten Folienschicht und der hieraus gebildeten Haftvermittlungsschicht beträgt vorzugsweise wenigstens 18 µm, insbesondere wenigstens 20 µm, insbesondere wenigstens 22 µm und/oder vorzugsweise höchstens 35 um, insbesondere höchstens 30 µm, insbesondere höchstens 28 µm.

Weiter wird vorgeschlagen, dass die Gleitschicht eine Dicke von wenigstens 50 µm, insbesondere von wenigstens 100 µm, insbesondere von wenigstens 150 µm und/oder von höchstens 500 um, insbesondere von höchstens 400 µm, insbesondere von höchstens 300 µm aufweist.

Es wird auch vorgeschlagen, dass die Gleitschicht von einer auf die Haftvermittlungsschicht aufgebrachten zweiten Folienschicht gebildet ist. Hierbei erweist es sich weiter als vorteilhaft, insbesondere wenn das Gleitschichtmaterial auf Basis von PTFE ausgebildet ist, dass das Gleitschichtmaterial, in geeigneter Weise in Barren oder sonstige Schichtform gebracht und verpresst wird und dann hiervon eine Schälfolie gewonnen wird. Diese Schälfolie kann dann auf die Haftvermittlungsschicht aufgebracht werden. Hierbei erweist es sich als vorteilhaft, wenn die erste und die zweite Folienschicht übereinander auf die Stützschicht aufgebracht und dann gemeinsam unter Anwendung von Druck und Temperatur mit der Stützschicht verbunden werden bzw. verbunden worden sind. Somit kann der Gleitlagerverbundwerkstoff durch einen einzigen Druck und Temperatur aufwendenden Laminier- oder Pressvorgang hergestellt werden.

Weitere Einzelheiten, Merkmale und Vorteile der Erfindung ergeben sich aus den beigefügten Patentansprüchen und aus der zeichnerischen Darstellung und nachfolgenden Beschreibung einer bevorzugten Ausführungsform

der Erfindung.

In der Zeichnung zeigt:

| | |
|---|---|
| Figur 1 | eine schematische Schnittansicht eines erfindungsgemäßen Gleitlagerverbundwerkstoffs; |
| Figur 2 | ein Rauheitsprofil y(x) entlang einer Messstrecke in x-Richtung der Länge $l_m$ zur Verdeutlichung der Ermittlung des Mittenrauwerts Ra; |
| Figur 3 | ein Rauheitsprofil y(x) entlang einer Messstrecke in x-Richtung der Länge $l_m$ zur Verdeutlichung der Ermittlung der mittleren Rautiefe Rz; |
| Figuren 4 und 5 | jeweils identische Messwerte eines bei einem erfindungsgemäßen Gleitlagerverbundwerkstoff ermittelten Schälwiderstands aufgetragen über dem Mittenrauwert Ra bzw. der mittleren Rautiefe Rz; und |
| Figur 6 | zeigt schematisch eine Anordnung zur Ermittlung eines Schälwiderstands, |
| Figur 7 | zeigt einen typischen Verlauf eines gemessenen Schälwiderstands. |

Figur 1 zeigt einen erfindungsgemäßen Gleitlagerverbundwerkstoff 2 mit einer metallischen Stützschicht 4 aus einem metallischen Stützschichtmaterial 6, insbesondere aus Stahl, und mit einer auf die Stützschicht 4 aufgebrachten Haftvermittlungsschicht 8 auf Basis eines ersten thermoplastischen Fluorpolymermaterials 10 und mit einer auf die Haftvermittlungsschicht 8 aufgebrachten Gleitschicht 12 auf Basis eines zweiten thermoplastischen Fluorpolymermaterials 14. Das erste thermoplastische Fluorpolymermaterial 10 der Haftvermittlungsschicht 8 ist nicht funktionalisiert, d.h. es weist keine zusätzlich angebrachten funktionellen Gruppen auf, die ausgehend von einem Basispolymer oder ausgehend von Basismonomeren in einem zusätzlichen Schritt unter Verwendung eines diese funktionellen Gruppen tragenden Modifizierungsagens vorgesehen werden könnten. Es erweist sich auch als vorteilhaft, wenn dieses erste thermoplastische Fluorpolymermaterial 10 eine eher geringe Schmelzviskosität aufweist, damit eine gute Benetzung einer auf noch näher zu beschreibende Weise aufgerauten Oberfläche 16 des Stützschichtmaterials 6 der Stützschicht 4 erzielt werden kann. Als besonders bevorzugt hat sich hier ein thermoplastisches Polymer auf Basis von ETFE erwiesen.

Es hat sich erfindungsgemäß gezeigt, dass eine für Gleitlageranwendungen ausreichende Anhaftung der Gleitschicht bzw. der Haftvermittlungsschicht an der Stützschicht auch bei Verwendung eines nicht funktionalisierten Fluorpolymers als Haftvermittlungsmaterial erreicht werden kann, wenn die Stützschicht eine lediglich durch mechanisches Aufrauen erzielte Oberflächenrauheit ihres Stützschichtmaterials mit einem Mittenrauwert Ra von 1,0 µm bis 3,0 µm und mit einer gemittelten Rautiefe Rz von 6,3 µm bis 25,0 µm aufweist und wenn das Haftvermittlungsmaterial eine Schmelzflussrate von 15,0 g/10min - 30,0 g/10min aufweist. Diese Oberflächenrauheit ist daher durch das metallische Stützschichtmaterial der Stützschicht selbst gebildet, ohne dass insbesondere auf chemischem oder nasschemischem Wege oder in sonstiger Weise die Oberfläche 16 des Stützschichtmaterials 6 in irgendeiner Weise chemisch abgetragen oder chemisch modifiziert oder ergänzt worden wäre. Die Haftvermittlungsschicht 8 ist unmittelbar auf die aufgeraute Oberfläche 16 des Stützschichtmaterials 6 aufgebracht.

Die Figuren 4 und 5 zeigen jeweils identische Messwerte eines Schälwiderstands in der Einheit N/25 mm, die über der Oberflächenrauheit einmal als Mittenrauwert Ra und das andere Mal als gemittelte Rautiefe Rz aufgetragen ermittelt wurden. Die Messwerte wurden der folgenden Tabelle entnommen und in Figuren 2 und 3 aufgetragen.

Der Schälwiderstand wurde in einer in Figur 6 skizzierten Testanordnung in einer Zugprüfeinrichtung ermittelt. Es wurde eine T-förmige Anordnung eines Prüflings zugrunde gelegt. Hierfür wurden gewissermaßen zwei übereinander angeordnete Gleitlagerverbundwerkstoffe der hier in Rede stehenden Art mit einer gemeinsamen in der Mitte angeordneten Gleitschicht verwendet. Die Schichtenabfolge des Prüflings ist in der Figur 6 von unten nach oben wie folgt: Stützschicht 4, Haftvermittlungsschicht 8, Gleitschicht 12, Haftvermittlungsschicht 8, Stützschicht 4. Die in Figur 6 rechts nach oben bzw. unten abstehenden Einspannabschnitte oder -enden 20 sind von der oberen bzw. unteren metallischen Stützschicht 4 gebildet, wo weder Haftschichtmaterial noch Gleitschichtmaterial aufgebracht ist. Die Einspannabschnitte haben eine Länge von etwa 20 mm und eine Breite von 25 mm. Die Länge des daran angrenzenden 5-schichtigen Verbundmaterials des Prüflings beträgt 100 mm, seine Breite orthogonal zur Zeichnungsebene beträgt 25 mm. Während die nicht dargestellten Klemmen, in denen die beiden Einspannabschnitte 20 des Prüflings fixiert sind, mit einer Schälgeschwindigkeit von 300 mm/min voneinander wegbewegt werden, wird mittels der Zugprüfeinrichtung die hierbei auftretende Kraft gemessen und in N/25 mm angegeben. Es handelt sich bei dem in der nachstehenden Tabelle jeweils angegebenen Schälwiderstand um einen Messwert in N/25 mm nach Überschreiten eines ersten Kraftmaximums während des sich daran anschließenden kontinuierlichen Auftrennens des Verbundwerkstoffs. Der Bereich dieser Messwertnahme beim Auftrennen des Verbundwerkstoffs, in dem sich ein ungefähr konstanter Wert einstellt, ist in den Figuren

6 und 7 mit einem Doppelpfeil angedeutet (nicht maßstabsgetreu). Sollte es hier zu Schwankungen kommen, so wird ein arithmetischer Mittelwert der Zugkraft als Schälwiderstand ermittelt.

Schälwiderstand

[N/25 mm]

| | Ra | Rz | Folie 1 funktionalisiert | Folie 2 nicht funktionalisiert |
|---|---|---|---|---|
| #A | 0,15 | 1,61 | 210 | 124 |
| #B | 1,05 | 7,8 | 205 | 192 |
| #C | 1,19 | 9,41 | 210 | 212 |
| #D | 2,54 | 18,5 | 200 | 197 |
| #E | 2,91 | 22,1 | 200 | 193 |
| #F | 3,12 | 25,3 | 195 | 175 |
| #G | 3,48 | 29,9 | 180 | 138 |
| #H | 3,78 | 35,8 | 160 | 122 |

Es wurden zwei verschiedene thermoplastische Fluorpolymermaterialien als Haftvermittlungsschicht zwischen einer mechanisch aufgerauten Stützschicht 4 aus Stahl und einer Gleitschicht 12 aus PTFE untersucht. Zur Bildung der Haftvermittlungsschicht wurde jeweils eine Folie einer Dicke von ca. 25 μm aus den jeweiligen Fluorpolymermaterialien verwendet. Die Dicke der Gleitschicht beträgt ca. 230 μm. Bei dem Material Folie 1 handelt es sich um ein Fluorpolymermaterial auf Basis von funktionalisiertem ETFE, welches polare Carboxylgruppen als funktionelle Gruppen aufweist. Bei dem anderen Material Folie 2 handelt es sich ebenfalls um ein Fluorpolymermaterial auf ETFE-Basis, welches jedoch nicht funktionalisiert wurde. Die ETFE-Basis beider Materialien war jeweils dieselbe. Das Haftvermittlungsmaterial auf Basis dieses Fluorpolymermaterials weist auch eine Schmelzflussrate zwischen 10,0 und 20,0 g/10min auf.

Man erkennt, dass das funktionelle Gruppen aufweisende funktionalisierte ETFE bei dem Material Folie 1 eine weitgehend unabhängig von der Oberflächenrauheit gleichbleibende zufriedenstellend hohe Anhaftung von 200 N/25 mm aufweist. Hingegen zeigt das nicht funktionalisiertes ETFE aufweisende Material Folie 2erst ab etwa einem Mittenrauwert Ra von ungefähr 1,0 und einer gemittelten Rautiefe Rz von etwa 6,3 μm zufriedenstellende Haftungswerte, die deutlich oberhalb von 150 N/25 mm liegen. Diese Haftungswerte fallen allerdings oberhalb eines Mittenrauwerts Ra von 2,7 μm bzw. oberhalb einer gemittelten Rautiefe Rz von etwa 22 μm wieder deutlich ab. In dem dazwischenliegenden Plateaubereich lässt sich hingegen eine gute Anhaftung auch unter Verwendung von nicht funktionalisiertem Fluorpolymer als Haftvermittlungsschicht zwischen einer Gleitschicht aus Fluorpolymer und der so mechanisch aufgerauten metallischen Stützschicht erreichen.

## Patentansprüche

1. Gleitlagerverbundwerkstoff (2) mit einer metallischen Stützschicht (4) aus einem Stützschichtmaterial (6), insbesondere aus Stahl, mit einer auf die Stützschicht (4) aufgebrachten Haftvermittlungsschicht (8) aus einem Haftvermittlungsmaterial auf Basis eines ersten thermoplastischen Fluorpolymermaterials (10) und mit einer auf die Haftvermittlungsschicht (8) aufgebrachten Gleitschicht (12) aus einem Gleitschichtmaterial auf Basis eines zweiten thermoplastischen Fluorpolymermaterials (14), wobei das erste thermoplastischen Fluorpolymermaterial (10) nicht funktionalisiert ist, wobei das die Haftvermittlungsschicht (8) bildende Haftvermittlungsmaterial eine Schmelzflussrate bestimmt nach der in der Beschreibungseinleitung genannten Messmethode von 15,0 g/10min - 30,0 g/10min aufweist und wobei die Stützschicht (4) eine allein durch mechanisches Aufrauen, also ohne eine weitergehende Aktivierung der Oberfläche und ohne Abscheidung von haftvermittelnden Gruppen im Wege einer nasschemischen Vorbehandlung, erzielte Oberflächenrauheit ihres Stützschichtmaterials (6) mit einem Mittenrauwert Ra bestimmt nach der in der Beschreibungseinleitung genannten Messmethode von 1,0 μm bis 3,0 μm und mit einer gemittelten Rautiefe Rz bestimmt nach der in der Beschreibungseinleitung genannten Messmethode von 6,3 μm bis 25,0 μm aufweist.

2. Gleitlagerverbundwerkstoff (2) nach Anspruch 1, **dadurch gekennzeichnet, dass** das Haftvermittlungsmaterial eine Schmelzflussrate bestimmt nach der in der Beschreibungseinleitung genannten Messmethode von wenigstens

20,0 g/10min aufweist.

3. Gleitlagerverbundwerkstoff (2) nach Anspruch 1 oder 2, **dadurch gekennzeichnet, dass** die Stützschicht (4) eine durch mechanisches Aufrauen erzielte Oberflächenrauheit ihres Stützschichtmaterials (6) mit einem Mittenrauwert Ra bestimmt nach der in der Beschreibungseinleitung genannten Messmethode von wenigstens 1,1 μm, insbesondere von wenigstens 1,2 μm, insbesondere von wenigstens 1,3 μm und/oder von höchstens 2,8 μm, insbesondere von höchstens 2,6 μm, insbesondere von höchstens 2,4 μm, insbesondere von höchstens 2,2 μm, insbesondere von höchstens 2,0 μm aufweist.

4. Gleitlagerverbundwerkstoff (2) nach Anspruch 1, 2 oder 3, **dadurch gekennzeichnet, dass** die Stützschicht (4) eine durch mechanisches Aufrauen erzielte Oberflächenrauheit ihres Stützschichtmaterials (6) mit einer gemittelten Rautiefe Rz bestimmt nach der in der Beschreibungseinleitung genannten Messmethode von wenigstens 8,0 μm, insbesondere von wenigstens 9,0 μm, insbesondere von wenigstens 10,0 μm, und/oder von höchstens 23,0 μm, insbesondere von höchstens 21,0 μm, insbesondere von höchstens 19 μm, insbesondere von höchstens 18,0 μm aufweist.

5. Gleitlagerverbundwerkstoff (2) nach einem oder mehreren der vorstehenden Ansprüche, **dadurch gekennzeichnet, dass** das erste thermoplastische Fluorpolymermaterial (10) einen Schmelzpunkt zwischen 220°C und 260°C aufweist.

6. Gleitlagerverbundwerkstoff (2) nach einem oder mehreren der vorstehenden Ansprüche, **dadurch gekennzeichnet, dass** das erste thermoplastische Fluorpolymermaterial (10) auf Basis von ETFE gebildet ist.

7. Gleitlagerverbundwerkstoff (2) nach einem oder mehreren der vorstehenden Ansprüche, **dadurch gekennzeichnet, dass** das zweite thermoplastische Fluorpolymermaterial (14) auf Basis von PTFE gebildet ist.

8. Gleitlagerverbundwerkstoff (2) nach einem oder mehreren der vorstehenden Ansprüche, **dadurch gekennzeichnet, dass** die Haftvermittlungsschicht (8) von einer auf die Stützschicht (4) aufgebrachten ersten Folienschicht gebildet ist.

9. Gleitlagerverbundwerkstoff (2) nach Anspruch 8, **dadurch gekennzeichnet, dass** die Dicke der ersten Folienschicht wenigstens 15 μm, insbesondere wenigstens 18 μm, insbesondere wenigstens 20 μm, insbesondere wenigstens 22 μm und/oder vorzugsweise höchstens 35 μm, insbesondere höchstens 30 μm, insbesondere höchstens 28 μm beträgt.

10. Gleitlagerverbundwerkstoff (2) nach einem oder mehreren der vorstehenden Ansprüche, **dadurch gekennzeichnet, dass** die Gleitschicht (12) eine Dicke von wenigstens 50 μm, insbesondere von wenigstens 100 μm, insbesondere von wenigstens 150 μm und/oder von höchstens 500 μm, insbesondere von höchstens 400 μm, insbesondere von höchstens 300 μm aufweist.

11. Gleitlagerverbundwerkstoff (2) nach einem oder mehreren der vorstehenden Ansprüche, **dadurch gekennzeichnet, dass** die Gleitschicht (12) von einer auf die Haftvermittlungsschicht (8) aufgebrachten zweiten Folienschicht gebildet ist.

12. Gleitlagerverbundwerkstoff (2) nach Anspruch 8 und 11, **dadurch gekennzeichnet, dass** die erste und die zweite Folienschicht übereinander auf die Stützschicht (4) aufgebracht und dann gemeinsam unter Anwendung von Druck und Temperatur mit der Stützschicht (4) verbunden worden sind.

## Claims

1. Plain bearing composite material (2) comprising a metal backing layer (4) consisting of a backing layer material (6), in particular steel, comprising an adhesion-promoting layer (8) applied to the backing layer (4) and consisting of an adhesion-promoting material based on a first thermoplastic fluoropolymer material (10) and comprising an anti-friction layer (12) applied to the adhesion-promoting layer (8) and consisting of an anti-friction material based on a second thermoplastic fluoropolymer material (14), wherein the first thermoplastic fluoropolymer material (10) is not functionalised, wherein the adhesion-promoting material forming the adhesion-promoting layer (8) has a melt flow rate of from 15.0 g/10 min to 30.0 g/10 min determined according to the measurement method mentioned in the introductory part of the description and wherein the backing layer (4) has a surface roughness of the backing layer

material (6) thereof achieved solely by means of mechanical roughening, i.e. without further activation of the surface and without deposition of adhesion-promoting groups by way of wet-chemical pretreatment, and having an average roughness value Ra of 1.0 um to 3.0 μm determined according to the measurement method mentioned in the introductory part of the description and having an averaged roughness depth Rz of 6.3 um to 25.0 μm determined according to the measurement method mentioned in the introductory part of the description.

2. Plain bearing composite material (2) according to claim 1, **characterised in** the that adhesion-promoting material has a melt flow rate of at least 20.0 g/10 min determined according to the measurement method mentioned in the introductory part of the description.

3. Plain bearing composite material (2) according to claim 1 or 2, **characterised in that** the backing layer (4) has a surface roughness of the backing layer material (6) thereof achieved by means of mechanical roughening and having an average roughness value Ra, determined according to the measurement method mentioned in the introductory part of the description, of at least 1.1 um, in particular at least 1.2 um, in particular at least 1.3 μm and/or at most 2.8 um, in particular at most 2.6 μm, in particular at most 2.4 um, in particular at most 2.2 μm, in particular at most 2.0 μm.

4. Plain bearing composite material (2) according to claim 1, 2 or 3, **characterised in that** the backing layer (4) has a surface roughness of the backing layer material (6) thereof achieved by means of mechanical roughening and having an averaged roughness depth Rz, determined according to the measurement method mentioned in the introductory part of the description, of at least 8.0 μm, in particular at least 9.0 μm, in particular at least 10.0 μm, and/or at most 23.0 μm, in particular at most 21.0 μm, in particular at most 19 μm, in particular at most 18.0 um.

5. Plain bearing composite material (2) according to one or more of the preceding claims, **characterised in that** the first thermoplastic fluoropolymer material (10) has a melting point of between 220°C and 260°C.

6. Plain bearing composite material (2) according to one or more of the preceding claims, **characterised in that** the first thermoplastic fluoropolymer material (10) is formed based on ETFE.

7. Plain bearing composite material (2) according to one or more of the preceding claims, **characterised in that** the second thermoplastic fluoropolymer material (14) is formed based on PTFE.

8. Plain bearing composite material (2) according to one or more of the preceding claims, **characterised in that** the adhesion-promoting layer (8) is formed of a first film layer applied to the backing layer (4).

9. Plain bearing composite material (2) according to claim 8, **characterised in that** the thickness of the first film layer is at least 15 μm, in particular at least 18 μm, in particular at least 20 μm, in particular at least 22 μm and/or preferably at most 35 μm, in particular at most 30 μm, in particular at most 28 μm.

10. Plain bearing composite material (2) according to one or more of the preceding claims, **characterised in that** the anti-friction layer (12) has a thickness of at least 50 μm, in particular at least 100 μm, in particular at least 150 μm and/or at most 500 μm, in particular at most 400 μm, in particular at most 300 μm.

11. Plain bearing composite material (2) according to one or more of the preceding claims, **characterised in that** the anti-friction layer (12) is formed of a second film layer applied to the adhesion-promoting layer (8).

12. Plain bearing composite material (2) according to claim 8 and 11, **characterised in that** the first and second film layer have been applied one above the other to the backing layer (4) and then bonded together with the backing layer (4) using pressure and temperature.

**Revendications**

1. Matériau composite pour palier antifriction (2) avec une couche de support métallique (4) en un matériau de couche de support (6), en particulier en acier, avec une couche conférant de l'adhérence (8) appliquée sur la couche de support (4) en un matériau conférant de l'adhérence à base d'un premier matériau fluoropolymère thermoplastique (10) et avec une couche de glissement (12) appliquée sur la couche conférant de l'adhérence (8) en un matériau de couche de glissement à base d'un second matériau fluoropolymère thermoplastique (14), dans lequel le premier

matériau fluoropolymère thermoplastique (10) n'est pas fonctionnalisé, dans lequel le matériau conférant de l'adhérence formant la couche conférant de l'adhérence (8) présente un indice de fluidité déterminé selon la méthode de mesure mentionnée dans le préambule de la description de 15,0 g/10 min à 30,0 g/10 min, et dans lequel la couche de support (4) présente une rugosité de surface de son matériau de couche de support (6) obtenue uniquement par grainage mécanique, c'est-à-dire sans activation supplémentaire de la surface et sans dépôt de groupes conférant de l'adhérence par un traitement de gravure préliminaire, avec une valeur de rugosité moyenne Ra déterminée selon la méthode de mesure mentionnée dans le préambule de la description de 1,0 à 3,0 μm, et avec une profondeur de rugosité moyenne Rz déterminée selon la méthode de mesure mentionnée l'introduction de la description de 6,3 μm à 25,0 μm.

**2.** Matériau composite pour palier antifriction (2) selon la revendication 1, **caractérisé en ce que** le matériau adhésif présente un indice de fluidité déterminé selon la méthode de mesure mentionnée dans le préambule de la description d'au moins 20,0 g/10 min.

**3.** Matériau composite pour palier antifriction (2) selon la revendication 1 ou 2, **caractérisé en ce que** la couche de support (4) présente une rugosité de surface de son matériau de couche de support (6) obtenue par grainage mécanique avec une valeur de rugosité moyenne Ra déterminée selon la méthode de mesure mentionnée dans le préambule de description d'au moins 1,1 μm, en particulier d'au moins 1,2 μm, en particulier d'au moins 1,3 μm et/ou d'au plus 2,8 μm, en particulier d'au plus 2,6 μm, en particulier d'au plus 2,4 μm, en particulier d'au plus 2,2 μm, en particulier d'au plus 2,0 μm.

**4.** Matériau composite pour palier antifriction (2) selon la revendication 1, 2 ou 3, **caractérisé en ce que** la couche de support (4) présente une rugosité de surface de son matériau de couche de support (6) obtenue par grainage mécanique avec une profondeur de rugosité moyenne Rz déterminée selon la méthode de mesure mentionnée dans le préambule de description d'au moins 8,0 μm, en particulier d'au moins 9,0 μm, en particulier d'au moins 10,0 μm, et/ou d'au plus 23,0 μm, en particulier d'au plus 21,0 μm, en particulier d'au plus 19 μm, en particulier d'au plus 18,0 μm.

**5.** Matériau composite pour palier antifriction (2) selon l'une quelconque ou plusieurs des revendications précédentes, **caractérisé en ce que** le premier matériau fluoropolymère thermoplastique (10) présente un point de fusion compris entre 220°C et 260°C.

**6.** Matériau composite pour palier antifriction (2) selon une ou plusieurs des revendications précédentes, **caractérisé en ce que** le premier matériau fluoropolymère thermoplastique (10) est formé à base d'ETFE.

**7.** Matériau composite pour palier antifriction (2) selon une ou plusieurs des revendications précédentes, **caractérisé en ce que** le second matériau fluoropolymère thermoplastique (14) est formé à base de PTFE.

**8.** Matériau composite pour palier antifriction (2) selon une ou plusieurs des revendications précédentes, **caractérisé en ce que** la couche conférant de l'adhérence (8) est formée par une première couche de film appliquée sur la couche de support (4).

**9.** Matériau composite pour palier antifriction (2) selon la revendication 8, **caractérisé en ce que** l'épaisseur de la première couche de film est d'au moins 15 μm, en particulier d'au moins 18 μm, en particulier d'au moins 20 μm, en particulier d'au moins 22 μm et/ou de préférence d'au maximum 35 μm, en particulier d'au maximum 30 μm, en particulier d'au maximum 28 μm.

**10.** Matériau composite pour palier antifriction (2) selon une ou plusieurs des revendications précédentes, **caractérisé en ce que** la couche de glissement (12) présente une épaisseur d'au moins 50 μm, en particulier d'au moins 100 μm, en particulier d'au moins 150 μm et/ou d'au plus 500 μm, en particulier d'au plus 400 μm, en particulier d'au plus 300 μm.

**11.** Matériau composite pour palier antifriction (2) selon une ou plusieurs des revendications précédentes, **caractérisé en ce que** la couche de glissement (12) est formée d'une seconde couche de film appliquée sur la couche conférant de l'adhérence (8).

**12.** Matériau composite pour palier antifriction (2) selon les revendications 8 et 11, **caractérisé en ce que** les première et seconde couche de film sont appliquées l'une sur l'autre sur la couche de support (4) et sont ensuite reliées

ensemble avec la couche de support (4) en utilisant la pression et la température.

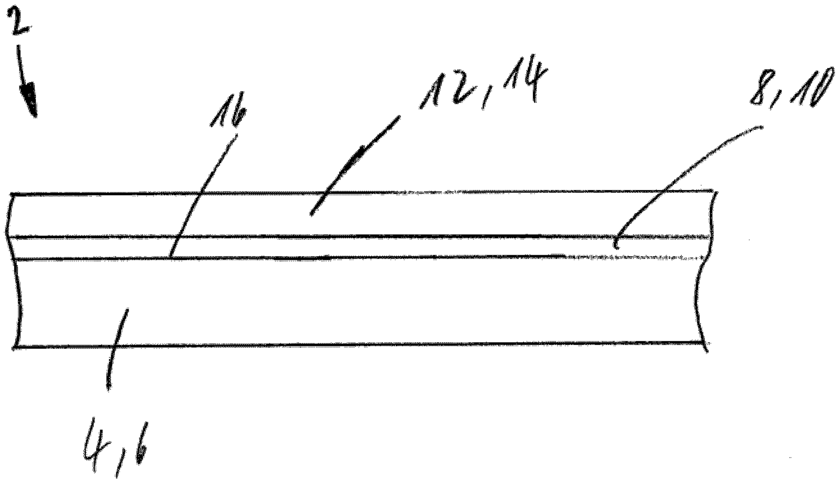


Fig.1

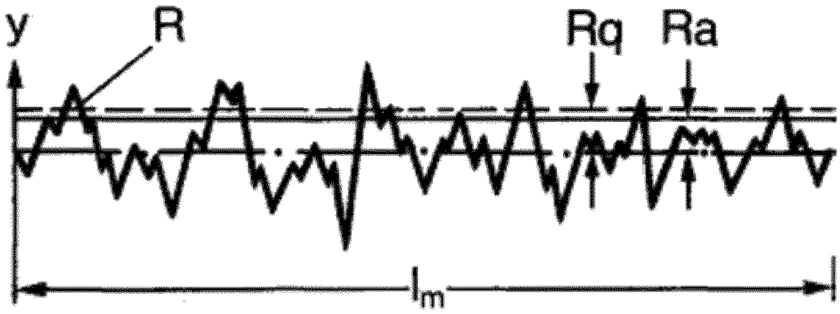


Fig.2

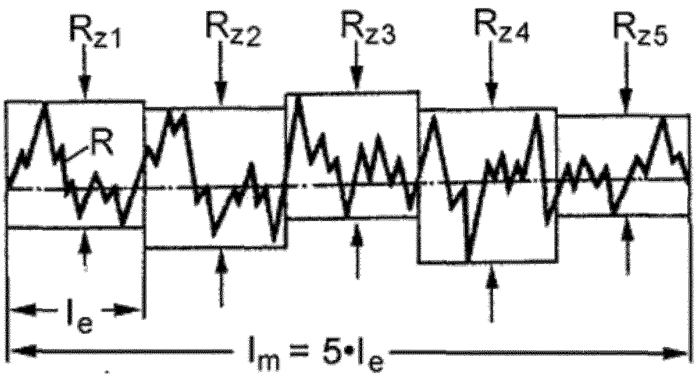


Fig.3

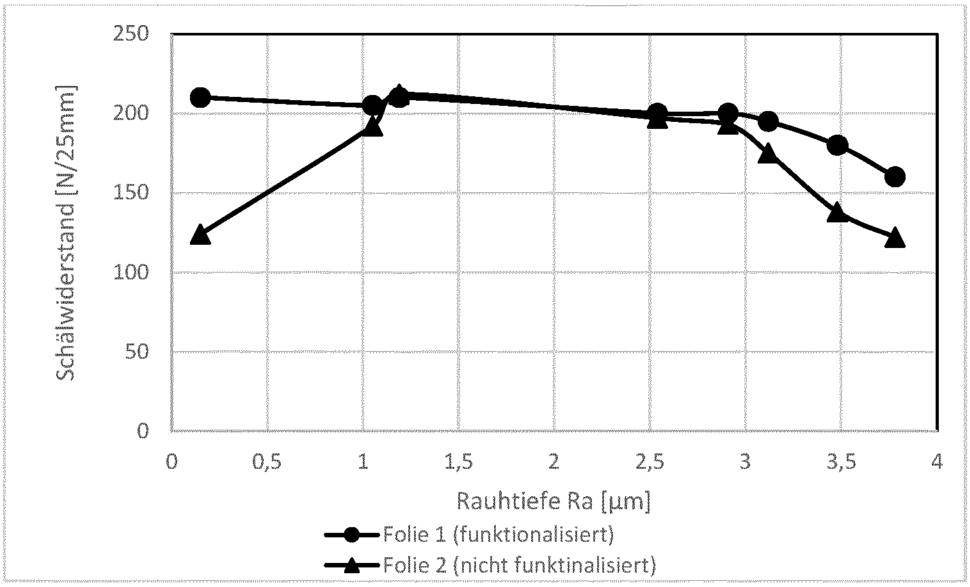
Schälwiderstand [N/25mm]
250
200
150
100
50
0
0
0,5
1
1,5
2
2,5
3
3,5
4
Rauhtiefe Ra [µm]
Folie 1 (funktionalisiert)
Folie 2 (nicht funktinalisiert)

Fig.4

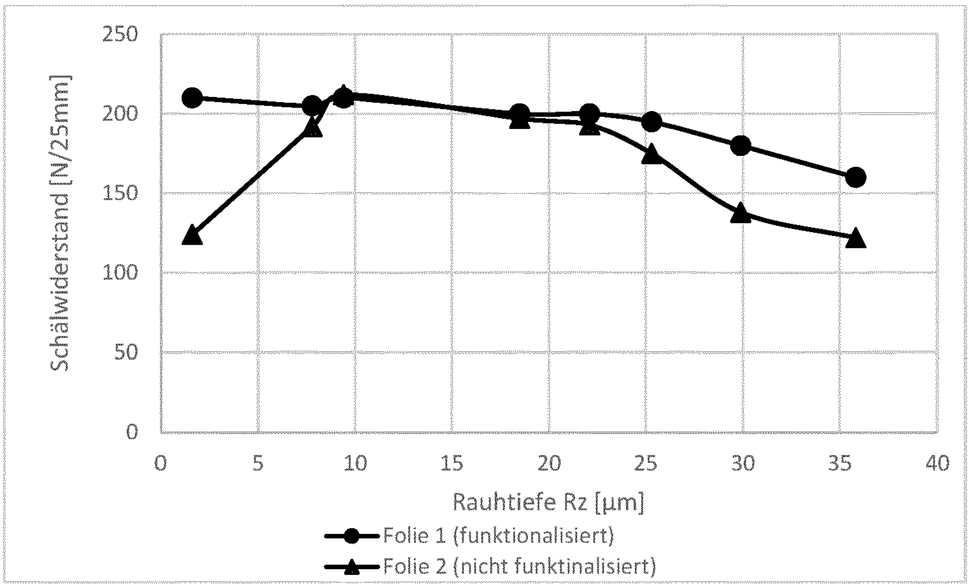
Schälwiderstand [N/25mm]
250
200
150
100
50
0
0
5
10
15
20
25
30
35
40
Rauhtiefe Rz [µm]
Folie 1 (funktionalisiert)
Folie 2 (nicht funktinalisiert)

Fig.5

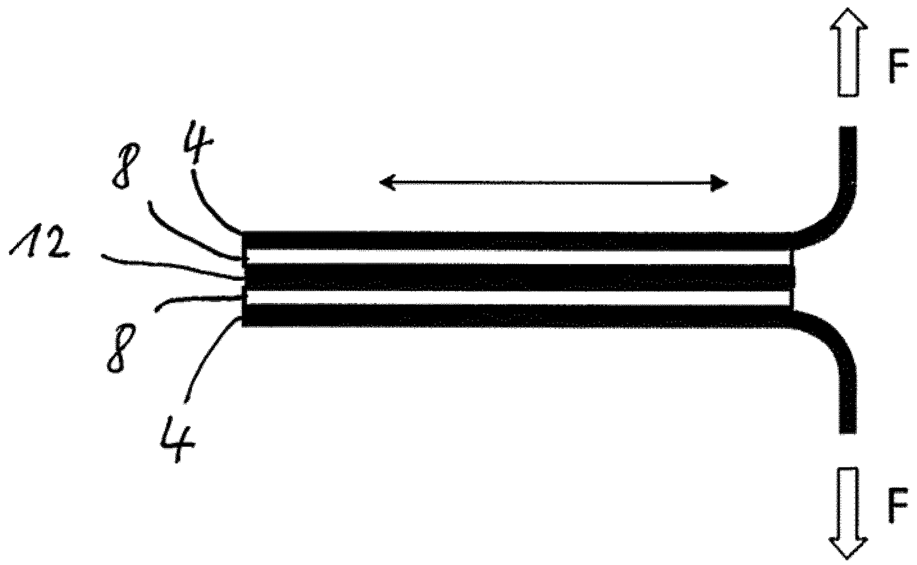


Fig.6

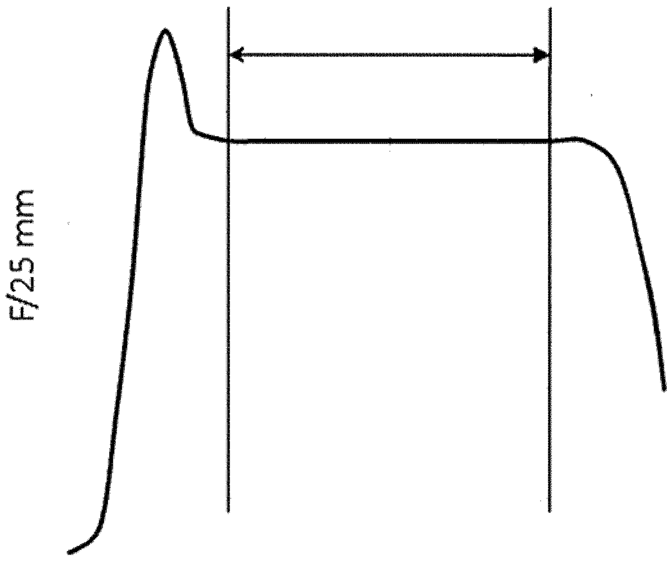


Fig.7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6726994 B1
- EP 2139675 A1
- EP 0848031 B1
- EP 2139675 B1
- US 5573846 A
- EP 2702285 B1
- US 20140010484 A1